# EUROPEAN PATENT APPLICATION

(11) **EP 1 273 820 A2**
(43) Date of publication of application: **08.01.2003**
(21) Application number: 02077161.4
(22) Date of filing: 31.05.2002
(51) Int. Cl.: F16F 9/53

(54) **Magnetorheological damper with bypass valving**

(30) Priority: 28.06.2001 US 894443
(71) Applicant: Delphi Technologies, Inc., Troy, MI 48007 (US)
(72) Inventor: Oliver, Michael L., Xenia, OH 45395 (US); Kruckemeyer, William C., Beavercreek, OH 45434 (US); Bishop, Todd A., Centerville, Oh 45459-5019 (US)
(74) Representative: Denton, Michael John

(57) **Abstract**

An adjustable vehicle suspension damper (10) configured to be arranged between a wheel assembly and a body of a vehicle, the adjustable damper including a tube (12). A piston (14) is slidably carried in the tube. A coil (52) is carried on the piston adjacent a first flow passageway (79) in the piston to produce a magnetic field thereacross and a control valve (65) is carried on the piston controlling fluid flow through a second flow passageway (80) in the piston.

## Description

### TECHNICAL FIELD

In general, the invention relates to damper assemblies for use in vehicle suspension systems, and more particularly, to a damper piston including a bypass valve assembly for a damper or magnetorheological shock absorber or monotube strut.

### BACKGROUND OF THE INVENTION

Current vehicle suspensions frequently incorporate dampers, i.e., shock absorber and strut assemblies as both a damping device and, in some applications, part of the suspension's load bearing structure. Dampers are conventionally known which include a piston with a connected piston rod. The piston is slidably contained in a fluid filled tube or chamber.

Vehicle suspension dampers, used to control vehicle ride and handling, typically contain control valves tuned to control vehicle jounce (compression of damper) and rebound damping (extension of damper) independently. It is generally known that it is desirable to have jounce damping set at approximately one-half to one-third the level of rebound damping. In a current design damper provided with magnetorheological features, damping can be externally controlled. Generally, this is accomplished by providing the damper with a magnetorheological fluid, which when exposed to a magnetic field, provides a condition of increased resistance to flow or apparent viscosity in the damper, and thus an increased damping effect. However, the range of damping available from the damper is the same for jounce and rebound.

It would be desirable to provide jounce and rebound control that overcomes the above and other disadvantages.

### SUMMARY OF THE INVENTION

One aspect of the present invention provides an adjustable vehicle suspension damper assembly configured to be arranged between a wheel assembly and a body of a vehicle, the adjustable damper including a tube. A piston is slidably positioned in the tube. A coil is positioned on the piston adjacent a first flow passageway in the piston to produce a magnetic field thereacross and a control valve is operably attached to the piston to control fluid flow through a second flow passageway in the piston.

Other aspects of the present invention provide the first flow passageway and tube with a magnetorheological fluid. The magnetic field can be produced across the first flow passageway to change the apparent viscosity of at least a portion of the magnetorheological fluid present therein. The control valve may be permitted to open during compression strokes of the damper. The control valve may be substantially closed during extension strokes of the damper. The control valve can include a first disc that permits a first amount of flow through the control valve during both compression strokes and extension strokes of the damper. The first disc can be a washer including a plurality of outer notches. The first disc may permit a second amount of flow through the control valve during compression strokes, the first amount of flow being less than the second amount of flow.

A spring member can bias the first disc against a valve seat portion of the control valve. The spring member can be a wavy washer or a Belleville washer. The second disc can be positioned between the first disc and the spring member. The second disc can be a solid washer. The control valve may include a retaining member positioned to retain the spring member and the first disc against the valve seat portion. The spacer can be positioned between the retaining member and the spring member. The spacer may provide a predetermined preload to the spring member.

Another aspect of the present invention provides a method of controlling an adjustable damper including enclosing a piston in a magnetorheological fluid, producing a magnetic field in a first passageway of the piston and controlling the flow through a second passageway of the piston. Controlling the flow through the second passageway may include providing a first flow through the second passageway during an extension stroke and providing a second flow through during a compression stroke, the first flow being substantially less than the second flow.

Another aspect of the present invention provides an adjustable damper including a means for slidably enclosing a piston in a magnetorheological fluid, a means for producing a magnetic field in a first passageway of the piston and a means for controlling the flow through a second passageway of the piston. The means for controlling the flow through the second passageway can provide a first flow through the second passageway during an extension stroke and provides a second flow through during a compression stroke, the first flow being substantially less than the second flow.

The foregoing and other features and advantages of the invention will become further apparent from the following detailed description of the presently preferred embodiments, read in conjunction with the accompanying drawings. The detailed description and drawings are merely illustrative of the invention rather than limiting, the scope of the invention being defined by the appended claims and equivalents thereof.

### BRIEF DESCRIPTION OF THE DRAWINGS

**FIG. 1** is a cross-sectional view of a prior art monotube damper suitable for use with the piston assembly of the present invention.
**FIG. 2** is a side view of one embodiment of the damper piston assembly of the present invention.
**FIG. 3** is a cross-sectional view of the embodiment shown in **FIG. 2** along lines **3-3.**
**FIG. 4** is an exploded perspective view of one embodiment of the damper piston assembly of the present invention.

### DETAILED DESCRIPTION OF THE PRESENTLY PREFERRED EMBODIMENTS

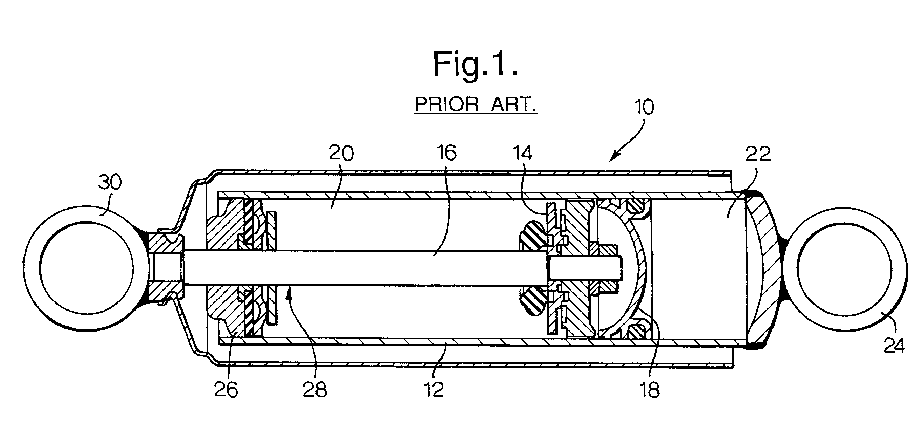

Referring to **FIG. 1,** a prior art vehicle damper assembly suitable for use with the piston assembly of the present invention is shown to illustrate the general elements and operation of one embodiment of a monotube damper. One embodiment of the monotube damper is shown generally at **10.** Damper **10** may include a body **12,** a piston **14,** a rod **16,** a gas cup **18,** a fluid chamber **20** and a gas chamber **22.**

The body **12** may be a generally cylindrical shape with a first closed-end including a vehicle attachment **24.** A second closed-end of the body **12** can include seal **26** with opening **28** through which an end of the rod **16** can project. The projecting end of the rod **16** can include attachment **30.** Piston **14** can be attached to the end of the rod **16** opposite attachment portion **30.** Piston **14** is positioned inside the body **12** and slides reciprocally therein, providing the interior of the body into fluid chamber **20** and gas chamber **22.** Piston **14** can include orifices or valves (not shown) to impart various controllable damping characteristics to the damper.

Gas cup **18** can be located between the piston **14** and the attachment end of body **12** and can be provided with a seal as is known in the art. Gas cup **18** can also slide within body **12.** Fluid chamber **20** defined by gas cup **18,** body **12** and seal **26** can be filled with a damping fluid. Chamber **22** can be filled with gas, typically a compressed inert gas, such as Nitrogen.

When the monotube damper **10** is stroked, damping fluid is forced through orifices and/or valves in the piston **14,** providing flow damping and therefore motion damping. The pressurized gas in chamber **22** presses the gas cup **18** toward damping fluid chamber **20,** pressurizing the fluid, and making the damper resistant to fluid cavitation. Also, when the damper is stroked, the rod **16** displaces damping fluid inside the body **12,** causing the gas cup **18** to move. For example, as a unit **10** is stroked shorter, the gas cup **18** is forced towards the attachment end **24** of the body.

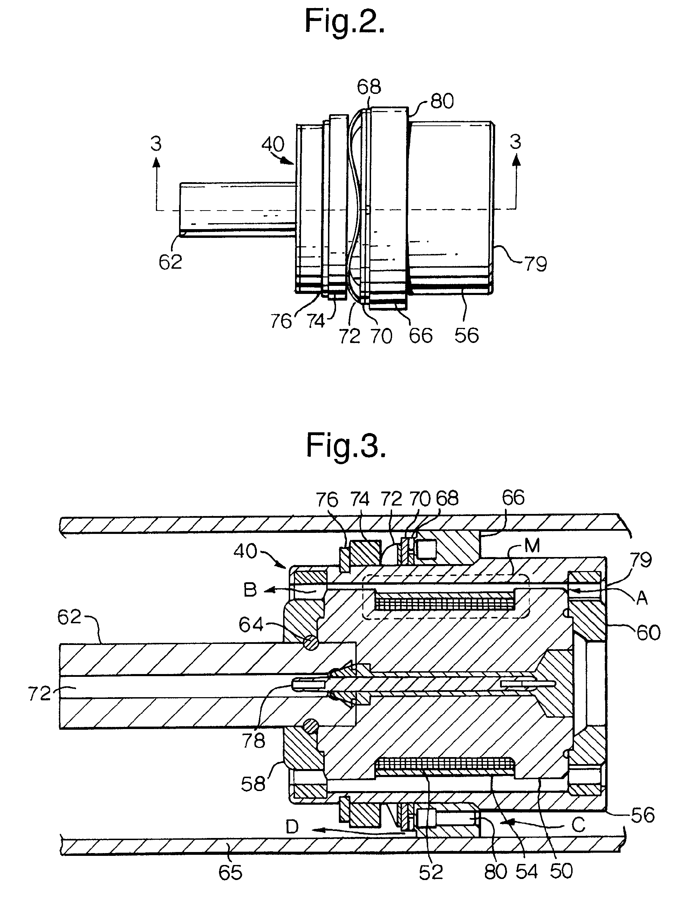

Referring to **FIGS. 2-4,** a piston assembly of the present invention for use in a damper is illustrated and indicated generally at **40.** The assembly **40** may include a magnetic core **50.** The magnetic core **50** may be made of mild steel or other suitable magnetic material. The core **50** may include a coil **52** and suitable electrical connectors or connections to provide the coil with electric current and a connection **78** to one or more external control devices, such as, for example, a system including a computer and sensors on the vehicle (not shown), which may be positioned in an axial opening **73** of the piston rod **62.** The coil **52** may be held in position about or to the core **50** by a plastic over molding or covering **54.**

A shell portion **56** of the piston assembly **40** may also be made of a magnetic material. The shell portion **56** may be positioned about the core **50** and crimped together to hold together an assembly including the core **50,** first and second end plates **58, 60.** The shell **56** can function to maintain clamping on the rod **62** through retaining ring **64** and end plate **58.** The shell portion **56** can be positioned about the core **50** to define a first passageway **79** therebetween.

A control valve assembly **65** can include seat **66,** which may be secured by brazing or other suitable means to the shell **56.** An orifice disc **68,** a valve disc **70** and a wavy washer or spring **72** can be installed against the valve seat **66.** It will be understood that discs **68** and **70** may be a single combined disc or washer or a plurality of discs or washers. Orifice disc **68** may include a plurality of outer notches **69** or the like for permitting passage of fluid therethrough regardless of whether the disc **68** is seated against the seat **66.** Spring **72** can be a wavy washer, Belleville spring or other suitable spring device or mechanism that provides a bias against plate **70.** A spacer **74** and a retaining ring **76** can be provided to retain the spring **72** to press the orifice disc **68** and the valve plate **70** against the valve seat **66.** The spacer **74,** spring **72,** valve disc **70,** orifice disc **68,** and a valve seat **66** may be made of magnetically inert material, such as stainless steel.

In operation, when the unit is stroked, magnetorheological fluid flows through, and is subject to control in, two areas of the piston. The arrow directions at A-D indicate flow of fluid during a compression stroke (shortening) and would be reversed for a rebound stroke.

The flow indicated by arrows A and B, through first flow passageway **79** can be controlled by the magnetic field generated when coil **52** is energized. Electrical current in the coil **52** may generate a magnetic field shown as M in the core **50** and the shell **56** and across the flow path **79** as shown. Magnetorheological fluid, typically a mixture including oil and small particles of iron, becomes resistant to flow, or exhibits an increased apparent viscosity when a magnetic field is applied thereto. By varying the current in the coil **52,** the magnetic field shown by M can be varied and damping force generated within this flow path is varied accordingly. The damping effect in the flow path (indicated by arrows A and B) is essentially the same for compression and rebound stroke or damping events when the current through the coil **52** is the maintained at the same value.

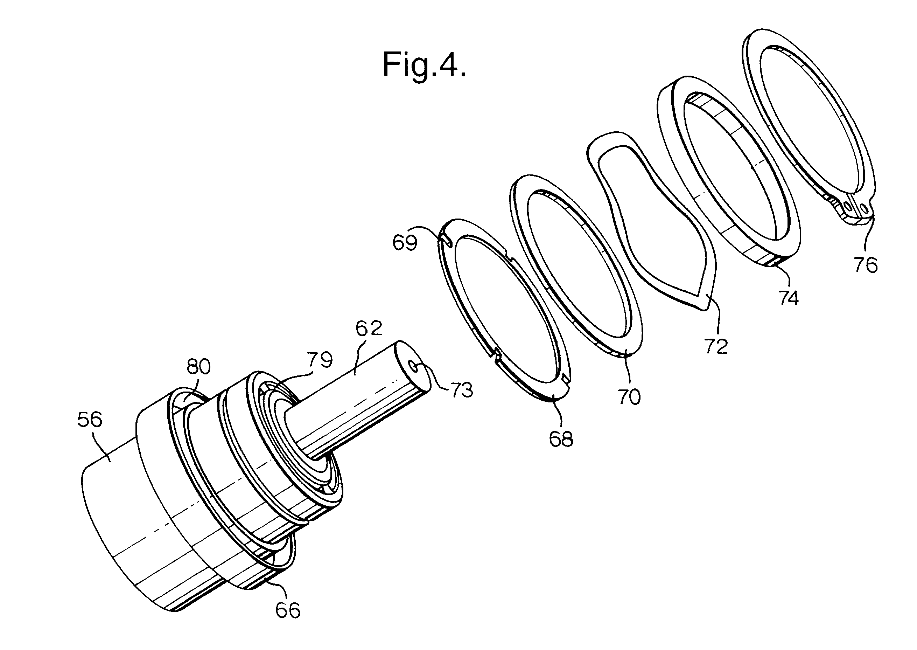

Flow, as indicated by arrows C and D, is allowed under all conditions by the orifice disc **68** (if present). During a rebound stroke, orifice flow only is permitted. During a compression stroke, additional flow is permitted when enough fluid pressure is generated to deflect the spring **72.** At this time, flow is controlled by the amount of lift of the valve disc **70,** and the orifice disc **68** and the dimensions of the openings provided to the valve seat **66.** The one or more openings in valve seat **66** are shown in **FIGS. 3** and **4** at **80.** The fluid pressure working against the spring **72** may control lift off of the valve disc **70** in response to fluid pressure applied to the valve disc. Spacer **74** may be installed as required to adjust the force applied by the spring **72.** In other words, the thicker the spacer **74,** the more force is required to unseat disc **68, 70** against the bias of spring **72.** It will be understood that no extra control need be applied to this flow.

The performance resulting from the two flow paths together provides compression damping which is a function of the combination of the external control path (A, B) and preset pressure regulated bypass path (C, D). Rebound damping is controlled primarily through the externally controllable path (A, B). This permits compression damping to be controlled within a more desired range, when compared to rebound damping.

While the embodiments of the invention disclosed herein are presently considered to be preferred, various changes and modifications can be made without departing from the spirit and scope of the invention. The scope of the invention is indicated in the appended claims, and all changes that come within the meaning and range of equivalents are intended to be embraced therein.

## Claims

1. An adjustable damper comprising:
a tube;
a piston slidably positioned in the tube;
a coil operably positioned adjacent a first flow passageway in the piston to produce a magnetic field thereacross; and
a control valve operably attached to the piston to control fluid flow through a second flow passageway in the piston.

2. The damper of claim 1 wherein the first flow passageway and tube includes a magnetorheological fluid.

3. The damper of claim 2 wherein the magnetic field produced across the first flow passageway changes the apparent viscosity of at least a portion of the magnetorheological fluid present therein.

4. The damper of claim 1 wherein the control valve is permitted to open during compression strokes of the damper.

5. The damper of claim 4 wherein the control valve is substantially closed during extension strokes of the damper.

6. The damper of claim 1 wherein the control valve includes a first disc that permits a first amount of flow through the control valve during both compression strokes and extension strokes of the damper.

7. The damper of claim 6 wherein the first disc is a washer including a plurality of outer notches.

8. The damper of claim 6 wherein the first disc permits a second amount of flow through the control valve during compression strokes, the first amount of flow being less than the second amount of flow.

9. The damper of claim 7 wherein the first disc is biased against a valve seat portion of the control valve by a spring member.

10. The damper of claim 9 wherein the spring member is a wavy washer.

11. The damper of claim 9 wherein the spring member is a Belleville washer.

12. The damper of claim 8 wherein a second disc is positioned between the first disc and the spring member.

13. The damper of claim 12 wherein the second disc is a solid washer.

14. The damper of claim 8 wherein the control valve includes a retaining member positioned to retain the spring member and the first disc against the valve seat portion.

15. The damper of claim 14 wherein a spacer is positioned between the retaining member and the spring member.

16. The damper of claim 15 wherein the spacer provides a predetermined preload to the spring member.

17. A method of controlling an adjustable damper comprising:
enclosing a piston in a magnetorheological fluid;
generating a magnetic field in a first passageway of the piston to produce an apparent viscosity change in the magnetorheological fluid responsive to the magnetic field; and
controlling the fluid flow through a second passageway of the piston.

18. The method of claim 17 wherein controlling the fluid flow through the second passageway includes providing a first flow through the second passageway during an extension stroke and providing a second flow through during a compression stroke, the first flow being substantially less than the second flow.

19. An adjustable damper comprising:
means for slidably enclosing a piston in a magnetorheological fluid;
means for generating a magnetic field in a first passageway of the piston; and
means for controlling the fluid flow through a second passageway of the piston.

20. The damper of claim 19 further comprising:
means for producing an apparent viscosity change in the magnetorheological fluid responsive to the magnetic field.
